# EUROPÄISCHE PATENTSCHRIFT

(11) **EP 0 356 923 B1**
(45) Veröffentlichungstag und Bekanntmachung des Hinweises auf die Patenterteilung: **05.01.1994**
(21) Anmeldenummer: 89115680.4
(22) Anmeldetag: 25.08.1989
(51) Int. Cl.: B23D 61/18

(54) **Säge**
Saw
Scie

(30) Priorität: 27.08.1988 DE 3829160; 10.09.1988 DE 3830819
(43) Veröffentlichungstag der Anmeldung: 07.03.1990
(73) Patentinhaber: ERNST WINTER & SOHN (GMBH & CO.), D-20259 Hamburg (DE)
(72) Erfinder: Sawluk, Wlodzemierz, Dr., D-2000 Hamburg 20 (DE)
(74) Vertreter: Minetti, Ralf, Dipl.-Ing.

(56) Entgegenhaltungen:
- EP-A- 0 037 707
- EP-A- 0 243 825
- AT-B- 232 825
- AT-B- 288 823
- DE-A- 1 906 532
- DE-A- 2 730 912
- DE-A- 2 740 891
- DE-A- 2 829 609

## Beschreibung

Die Erfindung betrifft eine Säge, die aus einem Sägeblattbesteht, das auf seinem Außenrand einen Hartmetall- oder diamanthaltigen Schneidbelag trägt, der in einzelne Segmente unterteilt ist.

Sägen zum Trennen von Metall, Stein oder Holz wie Kreissägen mit einem durchgehenden geschlossenen Schneidbelag oder mit einem Schneidbelag der in Segmente unterteilt ist, oder Gattersägen, die benutzt werden für die Bearbeitung von Stein oder Innenlochsägen zum Abtrennen dünner Scheiben, besitzen normalerweise ein Sägeblatt aus Stahl (siche z.B. DE-A- 2730 912).

Die Herstellung von Sägen mit einem Sägeblatt aus Stahl ist aus verschiedenen Gründen mit einem erheblichen Aufwand verbunden.

So müssen die Stahlbleche für die Ausbildung eines Sägeblattes zunächst abgekantet und gefräst werden. Danach müssen sie geschliffen werden und einer Wärmebehandlung ausgesetzt werden sowie gespannt und gerichtet werden. Dazu müssen sie unter eine so hohe Spannung versetzt sein, daß sie sich bei einer Benutzung der Säge nicht verformen, weil sich bei einer Durchbiegung ein Schnittverlauf ergeben würde.

Beieiner ausreichenden Stärke des Sägeblattes ist von Nachteil, daß der Stahl ein verhältnismäßig hohes spezifisches Gewicht von 7,5 bis 8 aufweist, denn das führt unter anderem insbesondere bei größeren und schnell umlaufenden Sägen zu dem Auftreten hoher Massenkräfte, die ihrerseits zu Verformungen des Sägeblattes beitragen.

Ein weiterer Nachteil bekannter Sägeblätter aus Stahl liegt in ihrem hohen Geräuschpegel, der auf Resonanzschwingungen zurückzuführen ist, die sich durch die Homogenität des Materials Stahl ergeben. Von besonderer Bedeutung sind außerdem die erheblichen Transportkosten, die auf dem hohen Gewicht von Sägen beruhen, insbesondere wenn diese einen größeren Durchmesser aufweisen.

Schließlich ist zu berücksichtigen, daß Sägen mit einem Sägeblatt aus Stahl und einem Schneidbelag aus Diamant bzw. kubisch kristallinem Bornitrid, welches hier allgemein gleichgesetzt wird mit Diamant, einer hohen Gefahr eines Rostbefalles ausgesetzt sind, weil mit ihnen aus Gründen der Kühlung des Diamantbelages im allgemeinen naß gearbeitet wird, in dem ihnen fortlaufend Kühlwasser zugeführt wird, welches sich auf dem Sägeblatt verteilt. Durch Rostansätze wird aber der feste Halt der hochwertigen Diamant-Schneidsegmente auf dem Sägeblatt beeinträchtigt und zwar insbesondere dann, wenn die hochwertigen Diamantschneidkörper durch besondere Halterungen mit dem Sägeblatt verbunden sind, wie es aus anderen Gründen ansich zweckmäßig ist.

Um dem Rechnung zu tragen, ist vielfach versucht worden, Sägen unter Verwendung von Kunststoff herzustellen.

Nach der DE-OS 27 40 891 ist eine Säge bekannt, die als Nabe einen ringförmigen Metallkern aufweist und einen metallischen Außenring, welcher die Schneidkörper trägt. An der Nabe und dem Außenring sind radial verlaufende Fäden oder Drähte befestigt, welche diese Teile miteinander verbinden. Diese Verbindungsglieder werden nach Herstellung der Konstruktion in Kunststoff eingebettet. Es ist verständlich, daß die Anordnung, Ausrichtung und Verspannung der Drähte eines erheblichen Aufwandes bedarf, wenn die Zentrierung des äußeren Metallringes zum Inneren Ring sichergestellt sein soll, bevor der Kunststoff in den Zwischenraum eingegossen oder eingepreßt wird.

Einen geringeren Aufwand erfordert die Herstellung einer bekannten Trennschleifscheibe aus Kunststoff, bei der die Schleifkörner unmittelbar in einem Kunststoff eingebettet sind, der durch Kohlenstofffasern verstärkt sein kann (DE-OS 28 29 609). Bei dieser Anordnung bildet die Scheibe nicht den Träger von Schneidsegmenten oder einem Schneidbelag wie bei herkömmlichen Sägen. Derartige Schleifscheiben sind auch nicht geeignet für den Einsatz von Schleifkörnern aus Diamant, die einer metallischen Bindung bedürfen wie beispielsweise bei Sägen größeren Durchmessers, welche benutzt werden zum Trennen von Stein oder Metall. Bei dieser bekannten Art von Schleifscheiben lassen sich demzufolgeauch nicht am Umfang der Scheibe angeordneten Schneidkörner nach einem Verbrauch gegen andere austauschen, wie es der Fall ist bei der Ausnutzung von Diamantkörnern, die in Schneidsegmenten gehalten sind, welche von einem Sageblatt getragen werden. Sägen mit hoher Leistung aufgrund einer hohen Diamantkonzentration lassen sich nach dieser bekannten Ausführung aus Kunststoff nicht herstellen, weil wegen einer ausreichenden Bindung der Schleifkörner nicht ein hoher Faseranteil zur Verstärkung des Kunststoffes möglich wäre. Hinzu kommt, daß sich bei derartigen Trennschleifscheiben zusammen mit dem Schleifkorn auch das Schleifblatt bzw. Sägeblatt selber verbraucht im Gegensatz zu Sägen, die einen nachträglich auf das Sägeblatt aufgetragenen Schneidbelag entweder durchgehend oder in Segmenten auf ihrem Außenrand tragen, der nach einem Verbrauch zu ersetzen ist.

Aufgabe der Erfindung ist es, eine Säge mit einem diamanthaltigen Schneidbelag zu schaffen, deren Sägeblatt von so hoher Festigkeit ist, wie ein Sägeblatt aus Stahl, darüber hinaus jedoch erhebliche Vorteile im Vergleich zu einem solchen mit sich bringt.

Diese Aufgabe ist durch die Merkmale des kennzeichnenden Teils des Anspruchs 1 gelöst. Ein derartiges erfindungsgemäßes Sägeblatt besitzt entsprechend dem Volumenprozentanteil der Kohle - oder Graphitfasern einen Elastizitätsmodul (E-Modul), der größer oder etwa gleich ist dem des E-Moduls von Stahl und eine etwa gleich hohe Festigkeit und ist darüber hinaus von erheblich geringerem Gewicht als bekannte Sägeblätter, so daß sich für die Praxis erhebliche Vorteile ergeben.

Durch den hohen E-Modul und die erhöhte Festigkeit kann eine geringere Schnittbreite ausgenutzt werden. Das erheblich verminderte Gewicht führt beim Betrieb zu vergleichsweise geringen Fliehkräften, so daß höhere Umlaufgeschwindigkeiten und damit höhere Schnittgeschwindigkeiten ermöglicht werden. Da das Material des Sägeblattes nicht homogen ist, ergibt sich eine umweltschonende Geräuschminderung. Insbesondere führt aber das geringe Gewicht zu erheblich verminderten Transportkosten, die sich besonders auswirken bei größeren Sägen und weiten Transportwegen, wie auch beispielsweise auf Expeditionen oder einer Ausnutzung der Sägen im Weltraum. Schließlich wird die Gefahr von Unfällen vermindert, die sich bei der Handhabung von Sägeblättern bisher vielfach auf deren hohes Gewicht zurückführen ließen.

Kohlefasern wie auch Graphitfasern haben einen Elastizitätsmodul, der höher liegt als der von Stahl. Durch ihren Verbund mit Kunststoff läßt sich daher ein Körper bzw. ein Sägeblatt schaffen, dessen Elastizitätsmodul im Bereich dessen von Stahl liegt. Ein Volumenprozentanteil der Kohle oder Graphitfasern des Sägeblattes in der Größenordnung von vorzugsweise 50 bis 60 % hat sich dafür als ausreichend und aus Kostengründen für zweckmäßig gezeigt. Dazu können als Bindemittel für die Fasern Kunststoffe handelsüblicher Art wie Epoxidharze oder Polyesterharze Anwendung finden. Darüber hinaus besteht die Möglichkeit, die Festigkeit noch zu steigern durch die zusätzliche Verwendung von Glasfasern, deren Anwendung sich ebenfalls kostensenkend auswirkt.

Die Sägeblätter aus Kunststoff nach der Erfindung können gegossen oder gepreßt werden oder durch ein Auftragen von Einzelschichten laminiert werden.

Würde das Sägeblatt allein aus einem Kunststoff bestehen, so wäre keine ausreichende Richtungsstabilität zu erwarten, das heißt das Sägeblatt könnte sich verlaufen unddamit zu einem Schnittverlauf führen. Derartiges wird verhindert durch die Verwendung von Graphit oder Kohlefasern, die in gewebeartigen Matten angeordnet werden und mit dem Kunstharz durchtränkt werden. Dabei können die Fasermatten in der Form von Kreissektoren geschnitten bzw. ausgebildet sein, die rotationssymmetrisch angeordnet sind und sich an ihren Randabschnitten gegenseitig überlappen, denn allgemein ist davon auszugehen, daß bei den Fasermatten die einzelnen Fasern im wesentlichen rechtwinklig zueinander verlaufen. Ein derartiger Faserverlauf über das gesamte Sägeblatt hinweg würde jedoch zu Ungleichmäßigkeiten in der möglichen Belastungsaufnahme führen.

Die Fasermatten können sandwichartig in mehreren Schichten übereinander bzw. nebeneinander liegend angeordnet sein und von unterschiedlicher Beschaffenheit sein. So können in der Mitte Matten aus weicheren Fasern liegen als außen, wobei zum Zwecke erhöher Festigkeit Matten mit einer Wabenstruktur (honeycomb) Verwendung finden können.

Weitere Merkmale der Erfindung bilden Gegenstand der Unteransprüche und sind nachstehend im Zusammenhang mit der Beschreibung von Ausführungsbeispielen der Erfindung unter Bezugnahme auf eine Zeichnung erläutert.

In der Zeichnung zeigen:
Figur 1: einen Teilausschnitt einer Kreissäge mit Schneidsegmenten;
Figur 2: einen Teilausschnitt einer Gattersäge;
Figur 3: einen Teilausschnitt einer Kreissäge mit sektorförmigen Fasermattenausschnitten;
Figur 4: einen Schnitt durch eine andere Ausführungsform einer Halterung;
Figur 5: dieAnordnung von Figur 4 gemäß dem Schnitt nach der Linie 8-8 und
Figur 6: ein Schneidsegment mit einer weiteren Ausführungsform einer Halterung;
Figur 7: einen Schnitt durch eine Sage mit einer T-förmigen Halterung und
Figur 8: einen Schnitt durch ein Sägeblatt mit mehreren Fasermatten.

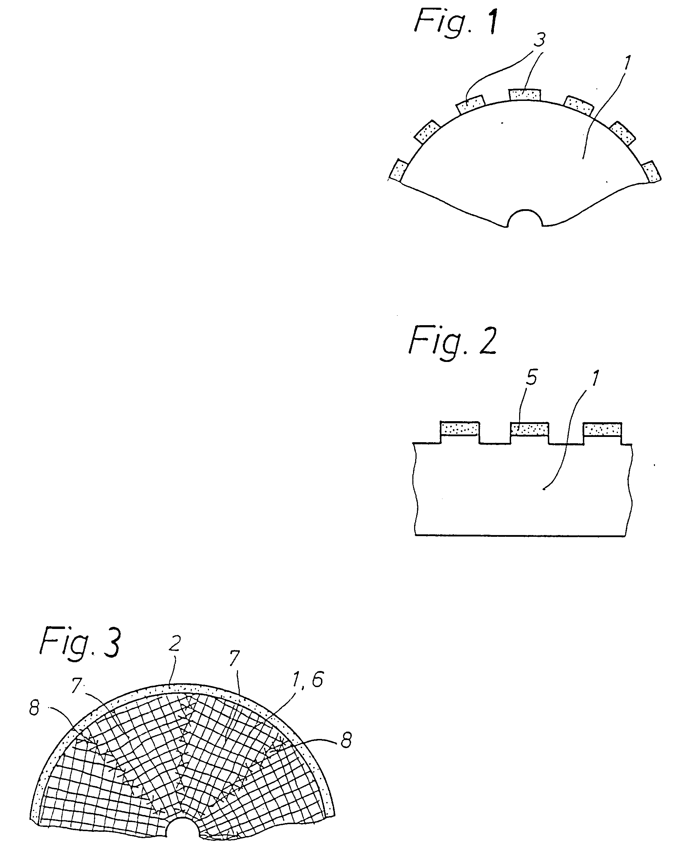

Das in Figur 1 wiedergegebene kreisförmige Sägeblatt 1 trägt auf seinem Außenumfang einen Schneidbelag 2, der unterteilt ist in einzelne Schneidsegmente 3, die einzeln befestigt sind auf dem Sägeblatt 1. Die Schneidsegmente enthalten Diamantkörner, die metallisch gebunden sind.

Die Figur 2 gibt den Ausschnitt eines Gattersägeblattes 1 wieder, das mit einzelnen Zähnen 5 versehen ist, die jeweils aus einem diamanthaltigen Grundkörper und einer Halterung bestehen, wie es nachstehend noch erläutert ist.

In allen diesen Ausführungen von Sägen besteht das Stammblatt bzw. das Sägeblatt 1 aus einem Epoxid - oder Polyesterharz, in dem Kohlefaser oderGraphitfaser mit einem Volumenprozentanteil von 50 bis 70 % eingebettet sind. Diese Fasern werden bei der Herstellung des Sägeblattes in der Form von gewebeartigen Matten 6 verwendet, welche mit dem Kunstharz durchtränkt werden. Dabei kommen vorzugsweise gemäß Figur 3 kreissektorförmige Mattenausschnitte 7 zur Anwendung, durch die sichergestellt wird, daß die Hauptfaserrichtungen über den Umfang des Sägeblattes nicht gleichbleibend verlaufen. Ein weiterer Ausgleich in der Faserrichtung läßt sich im übrigen erzielen durch die Verwendung einer Vielzahl von aufeinanderliegenden Fasermatten 6 anstelle einer einzigen stärkeren Fasermatte. Dadurch wird eine sandwich-artige Bauweise mit der ihr innewohnenden besonders hohen Festigkeit ausgenutzt. Die einzelnen Fasermatten können dabei von unterschiedlicher Beschaffenheit sein, um dadurch auch zur Schalldämmung beizutragen.

Im übrigen ist es von Vorteil, wenn sich die einzelnen Kreissektorabschnitte 7 an ihren Randabschnitten 8 gegenseitig überlappen.

Die Halterung eines durchgehenden Schneidbelages 2 insbesondere aber von einzelnen Schneidsegmenten 3 auf dem Sägeblatt 1 aus Kunststoff kann erfolgen unter Verwendung von Zwischenträgern, die als U-förmige Halterungen 9 ausgebildet sind. Derartige U-förmige Halterungen besitzen einen Schenkel 10 sowie einen zweiten Schenkel 11 und einen Mittelsteg 12. Das diamanthaltige Schneidsegment 14 ist dabei durch eine Lotschicht 15 auf der Außenseite des Mittelsteges 12 aufgelötet.

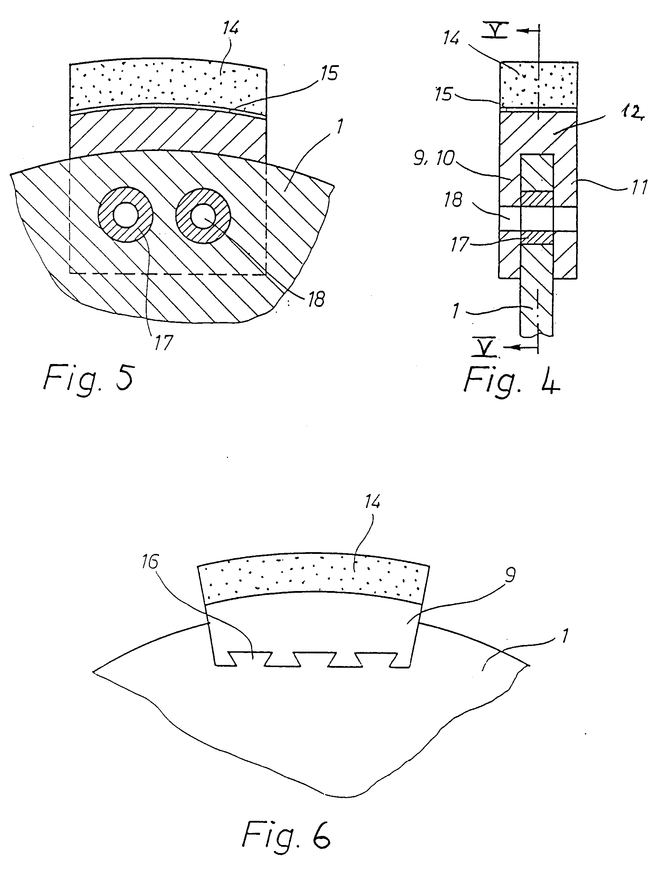

Die Halterung kann auch mit dem Sägeblatt 1 verbunden werden durch Schraubenbolzen oder Nieten. Dafür ist entsprechend den Figuren 4 und 5 die U-förmige Halterung 9 mit einer Bohrung 18 versehen, welche fluchtet mit dem Loch in einer Buchse oder Hülse 17, welche bei der Herstellung eines Sägeblattes in diesem mit eingebettet wird.

Schließlich zeigt die Figur 6 die Möglichkeit, eine Halterung 9 mit etwa schwalbenschwanzförmigen Ausnehmungen 16 zu versehen, in welche der Kunstharz bei der Herstellung eines Sägeblattes 1 einzudringen vermag, wenn das Sägeblatt 1 gegossen oder gepreßt wird. Durch diese Ausnehmungen wird die Haftfläche erheblich vergrößert. Dabei kann die Halterung 9 scheibenförmig sein.

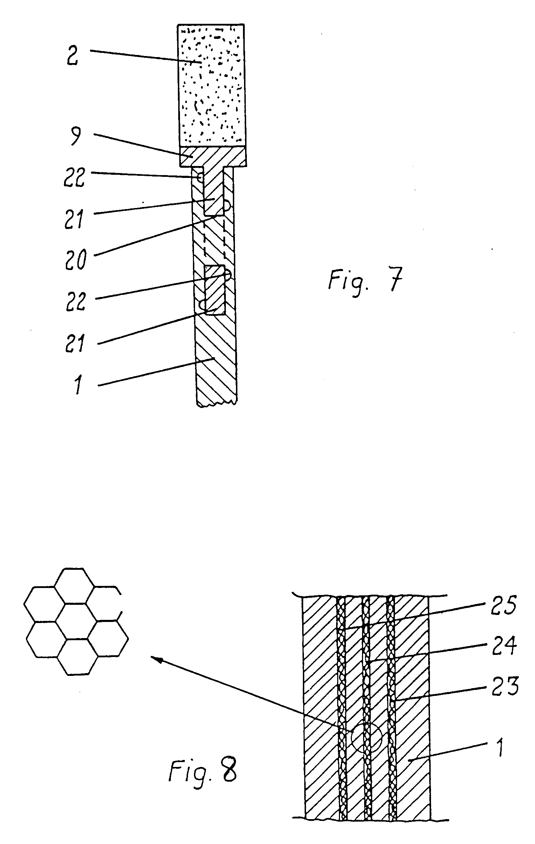

Die Ausführungsform nach Figur 7 zeigt ein Sägeblatt 1 aus einem faserverstärkten Kunststoff, dessen einzelne Schneidsegmente 14 mit jeweils einer Halterung 9 versehen sind, welche im Querschnitt T-förmig ausgebildet ist. Eine Halterung 9 kann auch mehrere Schneidsegmente tragen. Sie weist einen Mittelsteg 21 auf, der dünner ist als das Sägeblatt 1, so daß der Mittelsteg bei der Herstellung des Sägeblattes 1 in diesem eingebettet werden kann. Für seinen besseren Halt tragen dabei Öffnungen 20 bei, die beim Gießen oder Pressen des Sägeblattes von dem Kunstharz durchdrungen werden.

Anstelle der Öffnungen 20 können für die Verankerung auch Rippen oder andere Vorsprünge wie Kerben oder eine Körnung 22 vorgesehen sein.

Die Halterung 9 und ihr Mittelsteg 21 können als geschlossener Ring ausgebildet sein.

Der obere Querbalken der T-förmigen Halterung 9, welche auf ihrer Außenseite ein oder mehrere Schneidsegmente 14 trägt, ist breiter ausgebildet als die Stärke des Sägeblattes 1, so daß ein Freischnitt geschaffen wird.

Eine solche Halterung kann ebenfalls aus einem Metall bestehen. Grundsätzlich ist jedoch auch die Möglichkeit gegeben, eine solche Halterung aus einem Kunstharz zu verwenden und diese mechanisch oder durch chemische Reaktion mit dem Kunstharz des Sägeblattes 1 zu verbinden.

Die Figur 8 zeigt in schematischer Darstellung einen Schnitt durch ein Sägeblatt 1 aus Kunststoff mit mehreren Fasergewebematten 23, 24, 25, die sandwichartig angeordnet sind. Von ihnen hat die mittlere Matte 24 eine Wabenstruktur zur Erhöhung der Festigkeit bei geringem Gewicht (honeycomb).

## Patentansprüche

1. Säge, bestehend aus einem Sägeblatt (1), das auf seinem Außenrand einen Schneidbelag (2) aus Diamant oder Hartmetall trägt, der in einzelne Schneidsegmente (3) unterteilt ist, dadurch gekennzeichnet, daß das Sägeblatt (1) aus einem Kunststoff besteht, der mit einem Faserstoff aus Kohle- oder Graphitfasern von einem Volumenanteil von 30 - 70 % verstärkt ist, und daß die Schneidsegmente (3) mit Halterungen (9) versehen sind, die teilweise in dem Kunststoff des Sägeblattes (1) eingebettet sind.

2. Säge nach Anspruch 1, dadurch gekennzeichnet, daß als Faserstoff zusätzlich Glasfasern eingebettet sind.

3. Säge nach Anspruch 1, dadurch gekennzeichnet, daß die Faserstoffe in der Form gewebeartiger Matten (7) im Sägeblatt (1) in ein oder mehreren Schichten angeordnet sind.

4. Säge nach Anspruch 1, dadurch gekennzeichnet, daß die Fasermatten (7) in der Form von Kreissektoren ausgebildet sind, die rotationssymmetrisch angeordnet sind und sich an ihren Randabschnitten (8) gegenseitig überlappen.

5. Säge nach Anspruch 1, dadurch gekennzeichnet, daß die Halterungen (9) schwalbenschwanzförmige Ausnehmungen (16) aufweisen.

6. Säge nach Anspruch 1, dadurch gekennzeichnet, daß in dem Sägeblatt (1) Buchsen (17) für die Halterungen (9) eingebettet sind und der Schneidbelag (2) in Schneidsegmente (3) unterteilt ist, die mit im Querschnitt U-förmigen Halterungen (9) versehen sind, deren Schenkel (10, 11) mit dem Sägeblatt (1) verschraubt oder vernietet sind.

7. Säge nach Anspruch 1, dadurch gekennzeichnet, daß eine Halterung (9) für einen Schneidbelag (2) im Querschnitt T-förmig ausgebildet ist und mit seinem Mittelsteg im Kunststoff des Sägeblattes (1) eingebettet ist.

8. Säge nach Anspruch 7, dadurch gekennzeichnet, daß der den Schneidbelag (2) tragende Balken der T-förmigen Halterung (9) breiter ist als die Stärke des Sägeblattes (1).

9. Säge nach Anspruch 7, dadurch gekennzeichnet, daß der Mittelsteg der T-förmigen Halterung (9) mit Öffnungen (20) oder Rippen oder einer Körnung (21) versehen ist.

10. Säge nach Anspruch 7, dadurch gekennzeichnet, daß der Mittelsteg der Halterung (9) ringförmig ausgebildet ist.

## Claims

1. Saw consisting of a saw blade (1) which supports on its outer edge a cutting coating (2) made of diamond or hard metal which is divided into separate cutting segments (3), characterized in that the saw blade (1) is made out of a plastic which is reinforced by a fiber material made out of carbon or graphite fibers with a volume percent of 30 to 70 and that the cutting segments (3) are provided with supports (9) which are partially embedded in the plastic of the saw blade (1).

2. Saw according to claim 1, characterized in that glass fibers are additionally embedded as fiber material.

3. Saw according to claim 1, characterized in that the fiber materials are placed in the form of textile type mats (7) in the saw blade (1) in one or several layers.

4. Saw according to claim 1, characterized in that the fiber mats (7) are configured in the form of sectors of a circle which are placed symmetrical rotationally and overlap mutually at their edge portions (8).

5. Saw according to claim 1, characterized in that the supports (9) have dovetailed recesses (16).

6. Saw according to claim 11 characterized in that sleeves (17) for the supports (9) are embedded in the saw blade (1) and the cutting coating (2) is divided into cutting segments (3) which are provided with supports (9), the section of which is U-shaped, the posts (10, 11) of which are screwed or riveted to the saw blade (1).

7. Saw according to claim 1, characterized in that a support (9) for a cutting coating (2) is configured with a T-shaped section and is embedded with its middle bar in the plastic of the saw blade (1).

8. Saw according to claim 7, characterized in that the bar which supports the cutting coating (2) of the T-shaped support (9) is wider than the thickness of the saw blade (1).

9. Saw according to claim 7, characterized in that the middle bar of the T-shaped support (9) is provided with openings (20) or ribs or a graining (21).

10. Saw according to claim 7, characterized in that the middle bar of the support (9) is configured in the form of a ring.

## Revendications

1. Scie comportant une lame de scie (1) qui porte un revêtement tranchant (2) en diamant ou métal dur sur son bord extérieur, revêtement qui est divisé en différents segments tranchants (3), caractérisée en ce que la lame de scie (1) est en plastique renforcé avec une matière fibreuse constituée par des fibres de carbone ou de graphite de 30 à 70 % en volume et que les segments tranchants (3) sont pourvus de supports (9) qui sont en partie encastrés dans le plastique de la lame de scie (1).

2. Scie selon la revendication 1, **caractérisée en ce** que des fibres de verre sont encastrées en plus comme matière fibreuse.

3. Scie selon la revendication 1, **caractérisée en ce** que les matières fibreuses sont placées en forme de nattes de type tissu (7) dans la lame de scie (1) en une ou plusieurs couches.

4. Scie selon la revendication 1, **caractérisée en ce** que les nattes de fibres (7) sont configurées en forme de secteurs de cercle qui sont placés symétriques en rotation et qui se chevauchent mutuellement sur leurs sections marginales (8).

5. Scie selon la revendication 1, **caractérisée en ce** que les supports (9) présentent des creux en forme de queue d'arronde (16).

6. Scie selon la revendication 1, **caractérisée en ce** que des douilles (17) pour les supports (9) sont encastrées dans la lame de scie (1) et le revêtement tranchant (2) est divisé en segments tranchants (3) qui sont pourvus de supports (9) de section en forme de U dont les montants (10, 11) sont vissés ou rivés à la lame de scie (1).

7. Scie selon la revendication 1, **caractérisée en ce** qu'un support (9) pour un revêtement tranchant (2) est configuré avec une section en forme de T et est encastré avec son entretoise centrale dans le plastique de la lame de scie (1).

8. Scie selon la revendication 7, **caractérisée en ce** que la barre qui porte le revêtement tranchant (2) du support en forme de T (9) est plus large que l'épaisseur de la lame de scie (1).

9. Scie selon la revendication 7, **caractérisée en ce** que l'entretoise centrale du support en forme de T (9) est pourvu d'ouvertures (20) ou de nervures ou d'une grainure (21).

10. Scie selon la revendication 7, **caractérisée en ce** que l'entretoise centrale du support (9) est configurée en forme d'anneau.
